(19) **Europäisches Patentamt / European Patent Office / Office européen des brevets**

(11) **EP 2 588 885 B1**

(12) # FASCICULE DE BREVET EUROPEEN

(45) Date de publication et mention de la délivrance du brevet:
**25.02.2015 Bulletin 2015/09**

(21) Numéro de dépôt: **11738492.5**

(22) Date de dépôt: **01.07.2011**

(51) Int Cl.:
**G01S 19/11** *(2010.01)*  **G01S 19/21** *(2010.01)*
**G01S 19/22** *(2010.01)*

(86) Numéro de dépôt international:
**PCT/IB2011/052915**

(87) Numéro de publication internationale:
**WO 2012/001664 (05.01.2012 Gazette 2012/01)**

(54) **PROCÉDÉ DE RÉDUCTION DE L'ÉBLOUISSEMENT D'UN RÉCEPTEUR AU SEIN D'UN SYSTÈME, NOTAMMENT DE GÉOLOCALISATION**

VERFAHREN ZUR BLENDUNGSREDUKTION EINES EMPFÄNGERS IN EINEM SYSTEM, IM BESONDEREN EIN GEOORTUNGSSYSTEM

METHOD OF REDUCING THE GLARE OF A RECEIVER WITHIN A SYSTEM, IN PARTICULAR A GEOLOCATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2010 FR 1055313**

(43) Date de publication de la demande:
**08.05.2013 Bulletin 2013/19**

(73) Titulaire: **Institut Telecom / Telecom Sud Paris 91011 Evry (FR)**

(72) Inventeurs:
- **VERVISCH-PICOIS, Alexandre F-75010 Paris (FR)**
- **SAMAMA, Nel F-94430 Chennevieres (FR)**

(74) Mandataire: **Sartorius, Jérome Cabinet Nony 3, rue de Penthièvre 75008 Paris (FR)**

(56) Documents cités:
**US-A1- 2007 200 757**

- **VERVISCH-PICOIS A ET AL: "Interference Mitigation in a Repeater and Pseudolite Indoor Positioning System", IEEE JOURNAL OF SELECTED TOPICS IN SIGNAL PROCESSING, IEEE, US, vol. 3, no. 5, 1 octobre 2009 (2009-10-01) , pages 810-820, XP011278687, ISSN: 1932-4553, DOI: DOI:10.1109/JSTSP. 2009.2027805**
- **SUNG-HYUCK IM, GYU-IN JEE, YONG-BEOM CHO,: "An Indoor Positioning System Using Time-Delayed GPS Repeater", ION GNSS 19TH INTERNATIONAL TECHNICAL MEETING OF THE SATELLITE DIVISION, 26 septembre 2006 (2006-09-26), pages 2478-2483, XP002619717, Fort Worth TX**
- **SUNG-HYUCK IM, GYU-IN JEE: "Feasibility Study of Pseudolite Techniques Using Signal Transmission Delay and Code Offset", ION 2009 INTERNATIONAL TECHNICAL MEETING, 26 janvier 2009 (2009-01-26), pages 798-803, XP002619718, Anaheim CA**

**EP 2 588 885 B1**

## Description

La présente invention a pour objet un procédé de réduction de l'éblouissement d'un récepteur d'un système, notamment de géolocalisation, le système comportant en outre une pluralité d'émetteurs.

L'un des émetteurs est par exemple un pseudolite. On désigne par « pseudolite » un émetteur terrestre transmettant des signaux qui ont la même structure que les signaux envoyés par un satellite. Le terme « pseudolite » correspond à la contraction du terme "pseudo-satellite". Par exemple, un pseudolite GPS (*global positioning system*) émet un signal à 1,57542 GHz modulé en phase par un code de Gold et un message de navigation. On désigne par « code de Gold » une séquence binaire pseudo-aléatoire par exemple exposée dans l'article *"Optimal binary sequences for spread spectrum multiplexing"* de Robert GOLD.

Un code de Gold est le résultat de la combinaison de deux séquences de longueur maximale décalées dans le temps. Les séquences de longueur maximale sont elles-mêmes des séquences binaires périodiques générées par des registres à décalage (de 10 bits pour le GPS et 9 bits pour le système russe GLONASS). Les propriétés des séquences de longueur maximale sont les suivantes : elles sont équilibrées, c'est-à-dire que le nombre de 1 dans le code est égal au nombre de 0 plus 1 et, si N est la taille de la séquence, l'autocorrélation vaut -1/N en dehors du pic principal.

L'invention s'applique notamment à des systèmes utilisant le multiplexage par le code, encore appelé en anglais « *code division multiple access* » (CDMA), ce qui est par exemple le cas du GPS et du GNSS (*global navigation satellite system*).

Le phénomène d'éblouissement (« near far » en anglais), aussi appelé phénomène d'interférence intrinsèque, est un problème majeur se produisant dans les systèmes utilisant le CDMA, les signaux étant émis sur la même fréquence. Lorsque les codes utilisés par les sources d'émission n'exercent pas une discrimination suffisante par rapport à la différence de puissance qui peut exister entre elles à la réception par un récepteur, ce phénomène d'éblouissement ou d'interférence intrinsèque se produit. Lorsque le récepteur est ébloui, il n'est plus capable de poursuivre le code le plus faible, même en commettant des erreurs. Les codes de Gold, utilisés dans le GPS, permettent une discrimination généralement comprise entre 23,9 dB et 60,2 dB entre deux signaux provenant de deux sources distinctes. Ainsi, dès lors que deux signaux ont plus d'une vingtaine de décibels d'écart en puissance, des phénomènes d'interférences peuvent se produire.

Une application récemment prévue pour le GPS concerne le guidage des aéronefs lors des phases d'atterrissage et/ou de décollage, ce qui implique de déployer un système comprenant un ou plusieurs émetteurs, par exemple des pseudolites, pour améliorer la précision de la coordonnée verticale de l'aéronef, ainsi qu'au moins un récepteur. Tant que l'avion reste suffisamment loin de la piste à proximité de laquelle est placé le pseudolite, le signal additionnel émis par le pseudolite se comporte comme un signal satellite classique, mais, dès que l'avion s'approche de la piste, le signal du pseudolite devient si puissant qu'il éblouit le récepteur qui ne peut détecter les signaux issus des autres émetteurs, qui sont par exemple des satellites.

Dans un tel système, le récepteur reçoit par exemple les signaux venant du pseudolite et des satellites simultanément et corrèle le signal résultant de cette réception avec une réplique locale, encore appelée par la suite « signal local », du signal émis par un des émetteurs du système et qu'il veut poursuivre ("tracking" en anglais). Si le signal qu'il veut poursuivre a la plus faible puissance, les pics de corrélation croisées entre le signal local et les autres signaux plus puissants peuvent prendre des valeurs qui peuvent perturber le pic de corrélation principal du signal poursuivi, voire même le brouiller totalement dans le cas où le signal poursuivi est particulièrement atténué par rapport aux autres signaux.

Une solution connue pour résoudre ce problème d'éblouissement consiste à utiliser des pseudolites dont l'émission est pulsée, comme expliqué par exemple dans la publication *"GPS pseudolites: theory, design and applications"* H. Stewart Cobb ou dans l'ouvrage *"Global positioning system : theory and application"* Bryant D. ELROD A.J. VAN-DIERENDONCK. Néanmoins, une telle technique peut ne pas s'avérer suffisante et être relativement complexe à mettre en oeuvre.

La publication "Interference Mitigation in a Replater and Pseudolite Indoor Positioning System," Vervisch- Picois et al., 2009, décrit une méthode pour limiter les interférences entre signaux issus de différents re-émetteurs, où le signal original est retardé différemment sur chacun des re-émetteurs.

D'autres techniques ont encore été proposées pour résoudre le problème d'éblouissement mentionné ci-dessus, telles que le décalage fréquentiel, encore appelé « frequency offset » ou encore le saut de fréquence, encore appelé « frequency hopping ».

Il existe un besoin pour disposer d'un procédé de réduction de l'éblouissement d'au moins un récepteur au sein d'un système comprenant plusieurs émetteurs, qui soit relativement simple à mettre en oeuvre, efficace et peu coûteux.

L'invention a pour but de répondre à ce besoin et elle y parvient, selon l'un de ses aspects, grâce à un procédé de réduction de l'éblouissement d'au moins un récepteur au sein d'un système, notamment de géolocalisation, le système comprenant :

- au moins un premier émetteur émettant au moins un premier signal modulé par un premier code,
- au moins un deuxième émetteur émettant au moins un deuxième signal modulé par un deuxième code répétitif et potentiellement variable et un troisième signal déphasé par rapport au deuxième signal, le troisième signal étant modulé par le deuxième code retardé d'un premier retard, et
- le récepteur, celui-ci étant configuré pour détecter les signaux émis par les premier et deuxième émetteurs et mettant en oeuvre, pour la poursuite du premier signal, un signal local,

procédé dans lequel :

- on calcule une première grandeur de corrélation entre le signal local du récepteur modulé par le premier code et un signal résultant d'une combinaison d'au moins les premier, deuxième et troisième signaux,
- on calcule une deuxième grandeur de corrélation entre le signal local du récepteur modulé par le premier code retardé du premier retard et le signal résultant de la combinaison d'au moins les premier, deuxième et troisième signaux et,
- on combine les première et deuxième grandeurs de corrélation pour améliorer le rapport signal/bruit du premier signal reçu par le récepteur en réduisant l'éblouissement du récepteur par le deuxième signal.

Selon l'invention, le deuxième émetteur émet à la fois le deuxième et le troisième signal, selon un procédé de « double émission ». L'émission du troisième signal émis par le deuxième émetteur en plus du deuxième signal, le troisième signal étant déphasé par rapport à ce dernier et étant modulé par un code retardé par rapport à celui modulant le deuxième signal, permet de réduire les interférences induites par un émetteur sur l'autre.

En outre, selon l'invention, le troisième signal qui permet de réduire, et notamment de supprimer, l'éblouissement du récepteur est émis par le même émetteur que le deuxième signal. Tous les phénomènes physiques subis par le deuxième signal peuvent ainsi être les mêmes que ceux subis par le troisième signal, cela peut permettre d'éliminer également les interférences liées aux trajets indirects du deuxième signal.

En outre, l'émission des deuxième et troisième signaux par le même émetteur peut permettre de réduire, voire d'éliminer, les déperditions d'énergie puisqu'il est possible de récupérer l'intégralité de l'énergie provenant des deuxième et troisième signaux, d'où une amélioration significative du rapport signal/bruit après les opérations de corrélation.

On désigne par "code répétitif et potentiellement variable" un code comportant une pluralité de séquences successives, chaque séquence présentant la même durée, encore appelée « durée du code ». D'une séquence à l'autre, le code peut se répéter à l'identique, par exemple lorsqu'il s'agit d'un code périodique, auquel cas la durée du code correspond à sa période. En variante, d'une séquence à l'autre, le code prend des valeurs différentes Le premier code peut également être répétitif et potentiellement variable, étant notamment périodique.

Le premier code et le deuxième code peuvent présenter la même durée de code, par exemple la même période

Le premier retard peut être égal à 1 % près à la moitié de la durée du deuxième code. Lorsque le deuxième code est périodique, le premier retard est par exemple égal à 1 % à une demi-période du deuxième code.

Le déphasage entre le deuxième et le troisième signal peut être égal à 180° à 10 % près.

Avec les valeurs ci-dessus, le procédé selon l'invention peut permettre d'éliminer le signal issu du deuxième émetteur par combinaison des première et deuxième grandeurs de corrélation, ce qui permet au récepteur de poursuivre de manière satisfaisante le premier signal émis par le premier émetteur.

Le rapport entre la puissance du deuxième signal et la puissance du premier signal peut être supérieur à 24 dB. Ainsi, l'invention peut permettre la poursuite du premier signal bien que ce dernier présente une amplitude très inférieure à celle du deuxième signal.

Le deuxième émetteur est par exemple fixe par rapport au récepteur.

Le premier émetteur peut être mobile par rapport au récepteur, étant par exemple un satellite.

Les premier, deuxième et troisième signaux peuvent être des signaux utilisés dans les systèmes GPS ou GNSS, ces signaux mettant en oeuvre le multiplexage par le code.

Les premier et deuxième codes peuvent être des codes de Gold, encore appelés codes C/A ("*Coarse acquisition*" en anglais") dans le cas du GPS. Un code de Gold est périodique, a une longueur de 1023 moments et il est cadencé à 1,023 MHZ. La plus petite période des codes de Gold est de 1 ms dans le cas du GPS .

Les premier et deuxième signaux peuvent être émis simultanément, c'est-à-dire au même moment par les premier et deuxième émetteurs. Les deuxième et troisième signaux peuvent être émis simultanément, c'est-à-dire au même moment par le deuxième émetteur.

Les premier, deuxième et troisième signaux peuvent avoir la même fréquence porteuse, qui est par exemple la fréquence L1, selon l'appellation en vigueur dans les systèmes GPS ou GNSS, cette fréquence valant 1,57542 GHz.

Le premier émetteur peut être un satellite et le deuxième émetteur peut être un pseudolite.

Le procédé peut être mis en oeuvre dans un milieu extérieur, par exemple pour le guidage d'un aéronef dans les phases d'atterrissage et/ou de décollage depuis une piste.

Le signal local utilisé pour calculer la première grandeur de corrélation et le signal local utilisé pour calculer la deuxième grandeur de corrélation peuvent présenter des porteuses locales en phase, le signal local utilisé pour calculer la première grandeur de corrélation et le signal local utilisé pour calculer la deuxième grandeur de corrélation ne différant par exemple alors que par le retard du premier code. Dans le cas où le récepteur est statique par rapport aux émetteurs, une première porteuse locale en phase avec la deuxième porteuse locale peut permettre de réduire, voire de supprimer, l'éblouissement du récepteur.

En variante, le signal local utilisé pour calculer la deuxième grandeur de corrélation peut présenter une porteuse locale, appelée par la suite « deuxième porteuse locale », qui peut être déphasée, notamment selon un déphasage variable, par rapport à la porteuse locale du signal local utilisé pour calculer la première grandeur de corrélation, cette dernière étant appelée par la suite « première porteuse locale ». De telles première et deuxième porteuses locales peuvent permettre d'arriver au but mentionné ci-dessus lorsque le récepteur se déplace par rapport aux émetteurs puisque l'on peut ainsi tenir compte de l'effet Doppler induit par ce déplacement du récepteur. La deuxième porteuse locale présente par exemple un déphasage prédéterminé pendant une fraction de la période de calcul de la deuxième grandeur de corrélation et une valeur de déphasage égale à l'opposé de ladite valeur prédéterminée pendant la durée restante de la période de calcul de la deuxième grandeur de corrélation.

Par exemple, la deuxième grandeur de corrélation peut être calculée selon un temps d'intégration T égal à la période du deuxième code et le déphasage de la deuxième porteuse locale par rapport à la première porteuse locale peut être égal à $\alpha$ sur l'intervalle [t, t+T/2] et à -$\alpha$ sur l'intervalle [t+T/2, t+T].

Le déphasage de la deuxième porteuse locale peut être calculé sur la base de la fréquence Doppler du signal émis par l'émetteur de puissance la plus forte.

En variante, le récepteur peut être configuré pour générer des signaux locaux différents, chaque signal ayant une phase de porteuse locale calculée sur la base de la fréquence Doppler d'un émetteur différent du système.

Les deuxième et troisième signaux peuvent présenter la même porteuse.

Les première et deuxième grandeurs de corrélation peuvent être calculées et/ou combinées ensemble par le récepteur. L'opération de combinaison des première et deuxième grandeurs de corrélation est par exemple une combinaison linéaire, notamment une addition ou une soustraction.

Le premier et le deuxième code peuvent présenter la même durée de code, ou la même période, et le premier émetteur peut également émettre, en plus du premier signal, un autre signal ne différant du premier signal que par le fait qu'il est modulé par le premier code retardé du premier retard.

L'invention a encore pour objet, selon un autre de ses aspects, un système, notamment de géolocalisation, comportant :

- un premier émetteur émettant au moins un premier signal,
- au moins un deuxième émetteur émettant au moins un deuxième signal modulé par un deuxième code répétitif et potentiellement variable, notamment périodique, et
- au moins un récepteur configuré pour détecter les signaux émis par les premier et deuxième émetteurs et disposant, pour la poursuite du premier signal, d'un signal local,

le deuxième émetteur étant configuré pour émettre, notamment simultanément, le deuxième signal et un troisième signal déphasé par rapport au deuxième signal et modulé par le deuxième code retardé d'un premier retard.

Le premier retard peut être égal à 1 % près à la moitié de la durée, notamment à une demi-période, du deuxième code.

Le déphasage entre le deuxième et le troisième signal peut être égal à 180° à 10 % près.

L'invention a encore pour objet, selon un autre de ses aspects, un émetteur destiné à être utilisé au sein d'un système, notamment de géolocalisation, comprenant au moins un autre émetteur et un récepteur configuré pour détecter les signaux émis par ledit émetteur et l'autre émetteur, ledit émetteur étant configuré pour :

- émettre, notamment simultanément, un signal modulé par un code et un autre signal déphasé par rapport audit signal, l'autre signal étant modulé par ledit code retardé d'un retard.

L'invention a encore pour objet, selon un autre de ses aspects, un récepteur destiné à être utilisé au sein d'un système, notamment de géolocalisation, comprenant au moins un premier émetteur émettant au moins un premier signal modulé par un premier code et au moins un deuxième émetteur émettant au moins un deuxième signal modulé par un deuxième code répétitif et potentiellement variable, notamment périodique, le deuxième émetteur émettant en outre, notamment simultanément à l'émission du deuxième signal, au moins un troisième signal déphasé par rapport au deuxième signal et modulé par le deuxième code retardé d'un premier retard,
le récepteur étant configuré pour :

- poursuivre le premier signal, la poursuite du premier signal mettant en oeuvre un signal local du récepteur,
- calculer une première grandeur de corrélation entre le signal local du récepteur ayant une première porteuse locale et étant modulé par le premier code et un signal résultant d'une combinaison d'au moins les premier, deuxième et troisième signaux,
- calculer une deuxième grandeur de corrélation entre le signal local du récepteur ayant une deuxième porteuse locale et étant modulé par le premier code retardé du premier retard et le signal résultant de la combinaison d'au moins les premier, deuxième et troisième signaux et,
- combiner les première et deuxième grandeurs de corrélation.

Les première et deuxième porteuses locales peuvent être telles que mentionnées ci-dessus.

L'invention pourra être mieux comprise à la lecture qui va suivre, d'exemples non limitatifs de mise en oeuvre de celle-ci et à l'examen du dessin annexé sur lequel :

- la figure 1 représente de façon schématique un système dans lequel peut être mis en oeuvre le procédé selon l'invention,
- les figures 2 et 3 sont des représentations de grandeurs de corrélation,
- la figure 4 est un schéma fonctionnel de la boucle de poursuite d'un récepteur selon un premier exemple de mise en oeuvre de l'invention, la figure 5 est un schéma analogue à celui de la figure 4 d'une boucle de poursuite d'un récepteur selon un deuxième exemple de mise en oeuvre de l'invention,
- la figure 6 est une vue analogue à la figure 1 d'un système dans lequel peut être mis en oeuvre le procédé selon l'invention,
- les figures 7 et 8 représentent respectivement des première et deuxième grandeurs de corrélation calculées par le récepteur du système selon la figure 6,
- la figure 9 représente la grandeur obtenue en additionnant les première et deuxième grandeurs de corrélation selon les figures 7 et 8, et
- les figures 10 et 11 représentent des résultats de poursuite du signal d'un satellite par un récepteur, respectivement selon l'art antérieur et selon l'invention.

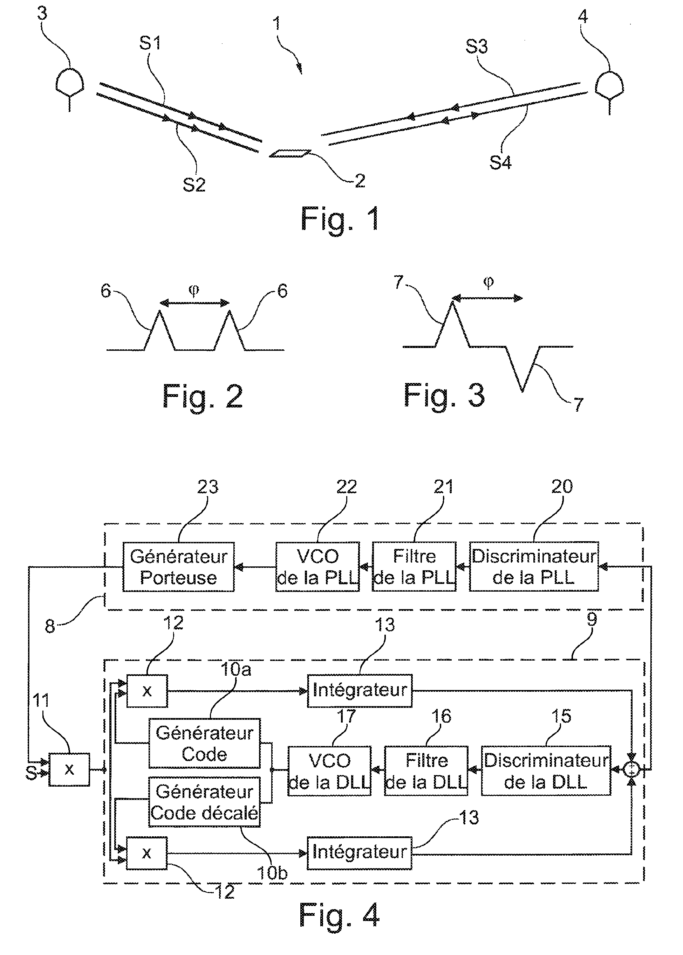

On a représenté à la figure 1 un système 1 de type GPS ou GNSS selon un premier exemple de mise en oeuvre de l'invention.

Le système 1 comporte un récepteur 2 et une pluralité d'émetteurs. Le récepteur 2 comporte entre autres une antenne et des boucles de poursuite réalisées par voie logicielle et/ou matérielle et représentées à la figure 4, qui seront décrites ultérieurement.

Dans l'exemple illustré, les émetteurs comprennent un premier émetteur 3 et un deuxième émetteur 4. Le premier émetteur 3 est mobile par rapport au récepteur 2 tandis que le deuxième émetteur 4 est fixe par rapport au récepteur 2, ces derniers étant par exemple solidaires du sol. Le premier émetteur 3 émet des signaux S1 et S2, avec

$$S1(t) = A_1 \sin(2\pi.(f_{L1} + f_1).t + \theta_1).D_1(t).c_1(t - d_1)$$

$$S2(t) = A_1 \sin(2\pi.(f_{L1} + f_1).t + \theta_1).D_1(t).c_1(t - \varphi - d_1)$$

$A_1$ étant l'amplitude du signal issu du premier émetteur 3 au niveau de l'antenne de réception du récepteur 2, $f_{L1}$ étant la fréquence porteuse du signal, par exemple la fréquence L1 de signaux GPS ou GNSS, $f_1$ étant la fréquence Doppler du signal issu du premier émetteur au niveau de l'antenne de réception du récepteur 2 incluant la dérive du biais d'horloge du récepteur, $\theta_1$ étant la phase de la porteuse du signal issu du premier émetteur au niveau de l'antenne de réception, $D_1$ étant le message de navigation du premier émetteur, $c_1$ étant le code modulant le signal du premier émetteur, dans l'exemple considéré un code périodique, par exemple un code de Gold, $d_1$ étant la pseudo-distance entre le premier émetteur 3 et l'antenne du récepteur 2 incluant le bais d'horloge du récepteur 2.

Le premier émetteur peut être un satellite et le deuxième émetteur un pseudolite.

Par commodité d'écriture, on a choisi d'inclure dans le signal émis par le premier émetteur 3 les effets liés au biais d'horloge et à sa dérive.

Comme on peut le constater en comparant les expressions des signaux S1 et S2, ces derniers diffèrent par le fait que, bien que le code modulant les signaux S1 et S2 soit le même, le code modulant le signal S2 est retardé d'un premier retard $\varphi$ par rapport au code modulant le signal S1. Les signaux S1 et S2 émis par le premier émetteur 3 ont par ailleurs la même porteuse dans l'exemple décrit.

Le deuxième émetteur 4 émet des signaux S3 et S4 d'expressions suivantes :

$$S3(t) = A_2 \sin(2\pi.(f_{L1} + f_2).t + \theta_2).D_2(t).c_2(t - d_2) \tag{4.1}$$

$$S4(t) = -A_2 \sin(2\pi.(f_{L1} + f_2).t + \theta_2).D_2(t).c_2(t - \varphi - d_2)]$$

Les données $A_2$, $f_{L1}$, $f_2$, $\theta_2$, $D_2$, $c_2$, $d_2$ sont définies relativement au deuxième émetteur 4 similairement à ce qui vient d'être énoncé pour le premier émetteur 3. $c_2$ est dans l'exemple considéré un code périodique.

Comme on peut le constater en comparant les expressions des signaux S3 et S4, ces derniers diffèrent par le retard $\varphi$ du code modulant le signal S3 par rapport au code modulant le signal S4 mais aussi par le fait que le signal S4 est déphasé de 180° par rapport au signal S3. On peut constater que les signaux S3 et S4 émis par le deuxième émetteur 4 ont la même porteuse.

Dans l'exemple décrit, la valeur de l'amplitude $A_2$ est supérieure à la valeur de l'amplitude $A_1$, le rapport entre $A_2$ et $A_1$ étant par exemple supérieur ou égal 12dB, correspondant à un rapport de puissance entre les signaux S1 ou S2 et S3 ou S4 supérieur à 24dB.

Les signaux émis par les premier et deuxième émetteurs 3 et 4 sont reçus par l'antenne du récepteur 2 puis amplifiés et convertis en fréquence intermédiaire (FI) plus basse que la fréquence $f_{L1}$.

Ces signaux sont dans l'exemple considéré échantillonnés, puis numérisés avant d'être traités par les canaux de réception du récepteur. Ces canaux de réception mettent en oeuvre des boucles de poursuite représentées sur la figure 4.

Ces boucles comprennent deux boucles à verrouillage de phase, la boucle PLL 8 et la boucle DLL 9, servant à démoduler respectivement la porteuse et le code du signal du premier émetteur 3.

Pour la poursuite du premier signal, le récepteur utilise une réplique locale du signal décomposé en deux éléments distincts : porteuse et code, que les boucles 8 et 9 synchronisent en permanence avec le signal émis par le premier émetteur. On peut suivre en parallèle autant d'émetteurs que l'on dispose de canaux dans le récepteur.

La figure 4 montre les boucles de poursuite 8 et 9, imbriquées l'une dans l'autre et utilisant les mêmes corrélateurs (ou intégrateurs).

Le signal local dans un canal du récepteur 2 peut être modélisé sous une forme regroupée comme suit:

-

$$S_{loc,i}(t,\tau) = \sin(2\pi.(FI + f_{loc}).t + \theta_{loc}).c_i(t - \tau)$$

- $f_{loc}$ correspond à la fréquence Doppler du signal local sur la porteuse et $\theta_{loc}$ correspond à la phase sur cette porteuse, incluant la dérive et le biais d'horloge du récepteur 2, $\tau$ est le retard induit sur le code i que l'on poursuit, qui est dans l'exemple illustré le code $c_1$ modulant les signaux S1 et S2 émis par le premier émetteur 3.

On va d'abord décrire la boucle DLL 9. Cette dernière a pour objectif de synchroniser le code local du récepteur sur le code incident qui est dans l'exemple illustré le code $c_1$ modulant les signaux émis par le premier émetteur 3. Cette boucle est par exemple la boucle dite « Avance moins Retard » (ou *Early minus Late* en anglais) qu'on appelle parfois aussi SDLL pour Standard DLL.

Cette boucle comprend des générateurs de code 10 configurés pour créer trois répliques du code : un générateur 10a créant une réplique en avance de 0.5 chip (un chip désignant ici un moment de code ou bit de code) qu'on appelle E (Early) et une réplique en retard de 0.5 chip qu'on appelle L (Late) et un générateur 10b créant une réplique sans offset de phase qu'on appelle P (Prompt). Ces répliques permettent d'assurer le fonctionnement du discriminateur 15 de la boucle 9 qui sera décrit ci-après et sont générées à partir du signal de commande du VCO 17 qui sera également décrit ultérieurement.

Le signal incident S=S1+S2+S3+S4 est mélangé par un mélangeur 11 aux répliques locales de la porteuse puis aux trois répliques du code local issues du générateur de code 10 par des mélangeurs 12.

Le signal en résultant est sommé par les intégrateurs 13 durant un temps Ts qui est le temps d'intégration des boucles. Cette opération a deux objectifs : elle joue à la fois le rôle de filtre passe-bas et de corrélateur.

Le filtrage passe bas permet d'éliminer la partie haute fréquence en $f_{loc}$+FI.

Dans les intégrateurs 13, six opérations de corrélation sont effectuées, ces dernières étant désignées comme suit :

- IP correspond à la corrélation Prompt en phase
- IE correspond à la corrélation Early en phase
- IL correspond à la corrélation Late en phase
- QP correspond à la corrélation Prompt en quadrature
- QE correspond à la corrélation Early en quadrature et,
- QL correspond à la corrélation Late en quadrature

Les résultats en sortie des intégrateurs 13 sont ensuite envoyés vers le discriminateur 15.

Le discriminateur 15 de la boucle 9 est configuré pour détecter l'erreur de phase entre le code $c_1$ du signal que l'on cherche à poursuivre et le code local. On choisit par exemple mais de façon non limitative pour formule D en version normalisée du discriminateur $D = \dfrac{\sqrt{IE^2 + QE^2} - \sqrt{IL^2 + QL^2}}{\sqrt{IE^2 + QE^2} + \sqrt{IL^2 + QL^2}}$

Le discriminateur est à l'équilibre lorsque la corrélation en avance est égale à la corrélation en retard.

La sortie du discriminateur est linéaire pour une erreur comprise entre 0.5 et - 0.5 chip, pouvant fonctionner jusqu'à $\pm 1.5$ chip sans diverger.

Le discriminateur 15 permet d'obtenir le déphasage correspondant entre le code du signal que l'on cherche à poursuivre et le code du signal local, ce qui permet à la boucle 9 de corriger de la quantité nécessaire la phase du code local qu'elle génère.

Le signal en sortie du discriminateur 15 est ensuite traité par un filtre 16 configuré pour réduire le bruit dans la boucle 9. Ce filtre 16 peut également permettre d'éliminer les signaux parasites résiduels causés soit par des interférences extérieures, soit par la corrélation croisées avec les autres signaux.

Le filtre 16 est par exemple un filtre passe bas actif apportant du gain dans la bande passante. On peut agir sur les paramètres suivants selon l'objectif recherché :

- l'ordre du filtre et,
- la bande de bruit équivalente Bn.

Par "ordre du filtre", il faut comprendre le nombre d'éléments réactifs comme des inductances et des capacités qui composent l'équivalent électronique du filtre numérique. Un ordre de filtre élevé peut conférer une meilleure tenue en régime dynamique, la boucle 9 étant alors capable de suivre les accélérations, mais étant plus sensible au bruit et surtout plus instable.

En ce qui concerne la bande de bruit équivalente, plus Bn est élevée, plus on tolère des excursions en fréquence dans la boucle et mieux on peut répondre à des sollicitations dynamiques importantes. En contrepartie, le bruit pourra être plus élevé. La boucle 9 étant fortement bruitée mais relativement statique (les variations du Doppler sur le code sont très faibles d'une intégration à la suivante), la valeur de Bn choisie est en général assez faible. Une valeur typique de Bn est 0.5 Hz pour la boucle 9. Dans d'autres exemples, Bn peut descendre jusqu'à 0.05 Hz

Lorsque la boucle 9 est à l'équilibre, la sortie du filtre 16 correspond à la différence de Doppler entre le code $c_1$ du signal incident et le code local du récepteur 2. La sortie du filtre 16 est alors reçue en entrée du VCO (*voltage controlled oscillator*) 17.

Le VCO 17 effectue une opération d'intégration du signal en sortie du filtre 16 pour obtenir une phase, un signal d'horloge étant alors généré à partir de cette phase et de la fréquence centrale du VCO, qui vaut par exemple 1,023 MHz, ce signal d'horloge pilotant ensuite le générateur de code 10.

On va maintenant décrire le fonctionnement de la boucle PLL 8. Cette boucle 8 est configurée pour démoduler la porteuse du signal incident. Il s'agit par exemple d'une boucle de Costas, cette dernière ayant notamment la particularité d'être insensible aux sauts de phase $\pi$ qui surviennent à cause des bits du message de navigation et de la traversée des hautes couches de l'atmosphère, ce qui peut s'avérer avantageux lorsque l'un des émetteurs est un satellite.

Cette boucle 8 comprend un discriminateur 20 dont la formule normalisée est par exemple mais de façon non limitative $D = \arctan\left(\dfrac{QP}{IP}\right)$ avec QP et IP tels que déjà définis plus haut.

Le signal en sortie du discriminateur 20 est ensuite traité par un filtre 21 qui est du même type que le filtre 16 précédemment décrit. L'ordre du filtre 21 est par exemple égal à n+1, lorsque n est l'ordre du filtre 16, et la valeur de Bn du filtre 21 est supérieure à celle du filtre 16, étant par exemple comprise entre 10 Hz et 18 Hz.

Le signal en sortie du filtre 21 est ensuite traité par un VCO 22 propre à la boucle 8, ce VCO 22 fonctionnant de la même façon que le VCO 17 précédemment décrit.

Le signal en sortie du VCO 22 pilote ensuite un générateur de porteuse 23.

Dans l'exemple de la figure 4, le VCO 17 de la boucle 9 ne reçoit en entrée que le signal en sortie du filtre 16.

Dans une variante non représentée, le signal en sortie du filtre 21 est également transmis au VCO 17 de la boucle 9, le VCO 17 générant alors un signal d'horloge à l'aide de la sortie du filtre 16 de la boucle 9 et du filtre 21 de la boucle 8. Le signal en sortie du filtre 16 est divisé par le rapport entre la fréquence $f_{L1}$ et la fréquence du code, c'est-à-dire par 1540 dans l'exemple décrit. Une telle récupération du signal en sortie du filtre 21 peut notamment permettre d'utiliser pour la bande de bruit équivalente Bn du filtre 16 de la boucle 9 des valeurs descendant jusqu'à 0,05Hz.

On va maintenant décrire le traitement effectué par le récepteur 2 lorsqu'il reçoit le signal S correspondant à la somme des signaux S1 à S4 dont les expressions ont été données ci-dessus.

Ces signaux S1 à S4 sont par exemple émis simultanément par les émetteurs 3 et 4.

Le signal au niveau de l'antenne du récepteur 2 placé dans la zone où la localisation doit être réalisée correspond à l'équation (4.1) suivante :

$$\begin{aligned} S(t) = &\ A_1 \sin(2\pi.(f_{L1} + f_1).t + \theta_1).D_1(t).[c_1(t - d_1) + c_1(t - \varphi - d_1)] \\ &+ A_2 \sin(2\pi.(f_{L1} + f_2).t + \theta_2).D_2(t).[c_2(t - d_2) - c_2(t - \varphi - d_2)] \\ &+ n(t) \end{aligned}$$

où n(t) correspond au bruit thermique et aux autres sources d'interférence.

Dans une première approche, il peut être considéré qu'il n'y a pas de message de navigation ou que la corrélation se passe toujours à l'intérieur d'un même bit de message (donc sans transition).

Le récepteur est dans l'exemple illustré configuré pour poursuivre le signal émis par le premier émetteur 3. Il est pour cela souhaitable de réduire, voire d'éliminer totalement, les produits d'intercorrélation liés à la présence des signaux émis par le deuxième émetteur 4.

Pour ce faire, le récepteur 2 calcule une première grandeur de corrélation entre le signal S et un premier signal local du récepteur, adapté à la poursuite des signaux émis par le premier émetteur 3. Comme on peut le voir, ce premier signal local est modulé par le code $c_1$ modulant les signaux émis par le premier émetteur 3, selon l'équation (4.2) suivante:

$$S_{loc,1}(t, \tau) = \sin(2\pi.(FI + f_{loc}).t + \theta_{loc}).c_1(t - \tau)$$

Dans cette équation, $f_{loc}$ correspond à la commande Doppler du VCO 22 de la boucle 8 et $\theta_{loc}$ est sa phase accumulée.

Pour le calcul de la première grandeur de corrélation, le temps d'intégration peut être choisi égal à T, T correspondant à la durée d'une période du code $c_1$ et du code $C_2$. Lorsque l'on intègre sur plus qu'un code, on applique ce qui va être décrit ci-dessous autant de fois qu'il y a de codes.

Le signal S de (4.1) est corrélé avec la réplique locale du signal $S_{loc}(t,\tau)$ de l'équation (4.2), et on obtient la première grandeur de corrélation $R_1(\tau)$ dont l'expression est donnée par l'équation (4.3) ci-dessous.

$$\begin{aligned} R_1(\tau) = &\ \frac{A_1}{T} \int_{t=0}^{t=T} \cos(2\pi(f_1 - f_{loc}).t + \theta_1 - \theta_{loc}).c_1(t - d_1).c_1(t - \tau).dt + n(\tau) \\ &+ \frac{A_1}{T} \int_{t=0}^{t=T} \cos(2\pi(f_1 - f_{loc}).t + \theta_1 - \theta_{loc}).c_1(t - \varphi - d_1).c_1(t - \tau).dt \\ &+ \frac{A_2}{T} \int_{t=0}^{t=T} \cos(2\pi(f_2 - f_{loc}).t + \theta_2 - \theta_{loc}).c_2(t - d_2).c_1(t - \tau).dt \\ &- \frac{A_2}{T} \int_{t=0}^{t=T} \cos(2\pi(f_2 - f_{loc}).t + \theta_2 - \theta_{loc}).c_2(t - \varphi - d_2).c_1(t - \tau).dt \end{aligned}$$

En parallèle, une deuxième grandeur de corrélation est calculée par le récepteur 2 entre le signal S(t) et un deuxième signal local qui ne diffère dans l'exemple décrit du premier signal local que par le fait que le code de ce deuxième signal local est déphasé d'un retard égal au premier retard φ déjà mentionné ci-dessus.

On obtient l'équation (4.4) ci-dessous.

$$R_1(\tau - \varphi) = \frac{A_1}{T} \int_{t=0}^{t=T} \cos(2\pi(f_1 - f_{loc}).t + \theta_1 - \theta_{loc}).c_1(t - d_1).c_1(t - \varphi - \tau).dt + n(\tau)$$

$$+ \frac{A_1}{T} \int_{t=0}^{t=T} \cos(2\pi(f_1 - f_{loc}).t + \theta_1 - \theta_{loc}).c_1(t - \varphi - d_1).c_1(t - \varphi - \tau).dt \ ,$$

$$+ \frac{A_2}{T} \int_{t=0}^{t=T} \cos(2\pi(f_2 - f_{loc}).t + \theta_2 - \theta_{loc}).c_2(t - d_2).c_1(t - \varphi - \tau).dt$$

$$- \frac{A_2}{T} \int_{t=0}^{t=T} \cos(2\pi(f_2 - f_{loc}).t + \theta_2 - \theta_{loc}).c_2(t - \varphi - d_2).c_1(t - \varphi - \tau).dt$$

Etant donné que l'on suppose que le récepteur est statique par rapport aux émetteurs, on peut effectuer l'approximation suivante dans les expressions (4.3) et (4.4) des première et deuxième grandeurs de corrélation : $f_1 = f_2 \approx f_{loc}$.

La mesure de $f_{loc}$ correspond alors selon cette hypothèse à la dérive du biais d'horloge qui peut prendre une valeur de plusieurs kHz.

En effectuant cette approximation, en notant :

$$R_{kk}(\tau) = \frac{A_k \cos(\theta_k - \theta_{loc})}{T} \int_{t=0}^{t=T} c_k(t - d_k).c_k(t - \tau).dt \quad (4.5)$$

$$R_{kj}(\tau) = \frac{A_j \cos(\theta_j - \theta_{loc})}{T} \int_{t=0}^{t=T} c_j(t - d_j).c_k(t - \tau).dt \quad (4.6)$$

En appliquant des changements de variables adéquats, et en prenant en compte le fait que la fonction sous les intégrales de (4.5) et (4.6) est périodique de période T, on peut simplifier les expressions (4.3) et (4.4) des première et deuxième grandeurs de corrélation qui deviennent alors respectivement, selon les équations (4.7) et (4.8),:

$$R_1(\tau) = R_{11}(\tau) + R_{11}(\tau - \varphi) + R_{12}(\tau) - R_{12}(\tau - \varphi) + n(\tau) \quad (4.7)$$

$$R_1(\tau - \varphi) = R_{11}(\tau + \varphi) + R_{11}(\tau) + R_{12}(\tau + \varphi) - R_{12}(\tau) + n(\tau) \quad (4.8)$$

Dans les équations (4.7) et (4.8), les termes de corrélation « utiles » sont les termes en $R_{11}$ puisque l'on cherche à poursuivre les signaux émis par le premier émetteur 3.

Les termes d'interférences que l'on cherche à éliminer sont les termes en $R_{12}$, qu'on appelle aussi termes de corrélation croisée.

On additionne ensuite les première et deuxième grandeurs de corrélation $R_1(\tau)$ et $R_1(\tau - \varphi)$. Ce faisant, on obtient le résultat selon l'équation (4.9), en négligeant le bruit thermique n(t) :

$$R_l(\tau) + R_1(\tau - \varphi) = 2.R_{11}(\tau) + R_{11}(\tau - \varphi) + R_{11}(\tau + \varphi) + R_{12}(\tau + \varphi) - R_{12}(\tau - \varphi) \ (4.9)$$

On constate que dans l'expression résultant de l'addition des première et deuxième grandeurs de corrélation, les termes $R_{12}(\tau)$ ont disparu.

Il reste alors deux termes d'interférence $R_{12}(\tau + \varphi)$ et $R_{12}(\tau - \varphi)$ et trois termes de signal utile $R_{11}(\tau)$, $R_{11}(\tau - \varphi)$ et $R_{11}(\tau \ \varphi)$.

Pour que les interférences s'éliminent tout-à-fait, il faut que le premier retard $\varphi$ soit tel que la relation (4.10) ci-dessous soit vérifiée:

$$R_{12}(\tau + \varphi) - R_{12}(\tau - \varphi) = 0$$

Une condition suffisante pour que la relation (4.10) ci-dessus soit vérifiée est que la fonction $R_{12}$ soit périodique, ce qui est effectivement le cas lorsque $R_{12}$ est une fonction d'intercorrélation ou d'autocorrélation.

La plus petite période de la fonction $R_{12}$ vaut $NT_c$, N étant le nombre de moments dans un code, N étant par exemple à 1023 pour un code GPS sur L1, et $T_c$ étant la durée d'un moment de code.

Etant donné que le décalage séparant les deux termes de (4.10) est égal à $2\varphi$, une période égale à $2\varphi$ de la fonction $R_{12}$ permet de vérifier la relation (4.10).

Ainsi, en choisissant le premier retard $\varphi$ de telle sorte que $2\varphi = NT_c$ C'est-à-dire que :

$$\varphi = \frac{NT_c}{2} = \frac{T}{2} = T_{1/2}$$

Dans l'exemple décrit, on peut éliminer les termes d'interférence entre les signaux des premier et deuxième émetteurs en choisissant le premier retard $\varphi$ égal à une demi-période du code $c_1$.

Dans le cas du code $c_1$ utilisé dans l'exemple considéré, la demi-période représente 511,5 moments de code et correspond ainsi à 0.5 ms.

En outre, le signal utile que l'on cherche à récupérer avec le récepteur 2, c'est-à-dire les termes de corrélation $R_{11}(\tau)$, $R_{11}(\tau - \varphi)$ et $R_{11}(\tau + \varphi)$ correspondant au premier émetteur 3, n'est pas affecté par la valeur de premier retard ci-dessus.

En effet, la fonction $R_{11}$ étant elle-même T périodique, après addition des première et deuxième grandeurs de corrélation, on obtient dans l'équation (4.9):

$$2.R_{11}(\tau) + R_{11}(\tau - T_{1/2}) + R_{11}(\tau + T_{1/2}) = 2.R_{11}(\tau) + 2.R_{11}(\tau - T_{1/2}) \ (4.12)$$

Le résultat de la combinaison des première et deuxième grandeurs de corrélation est représenté sur la figure 2 sur laquelle figure en abscisse le déphasage $\tau$ dans l'équation (4.12) entre les codes du signal incident et le code du signal local et en ordonnée la valeur de la corrélation. Comme on peut le voir, on se trouve en présence de deux pics de corrélation 6 distincts, mais porteurs de la même information, et décalés d'une demi-période de code. Ce décalage entre les deux pics de corrélation, peut permettre de suivre le code modulant le premier émetteur 3 sans problème d'interférence due au deuxième émetteur 4.

Seul subsiste dans l'exemple décrit le pic secondaire de l'autre fonction $R_{11}$, mais comme le signal d'interférence provient de la même antenne, son niveau est minime.

Si, contrairement à ce qui vient d'être décrit, le récepteur 2 cherche à poursuivre les signaux émis par le deuxième émetteur 4, les signaux locaux mis en oeuvre par le récepteur 2 ont cette fois-ci pour expression

$$S_{loc,2}(t,\tau) = \sin(2\pi.(FI + f_{loc}).t + \theta_{loc}).c_2(t - \tau)$$

et

$$S_{loc,2}(t, \tau - T_{1/2}) = \sin(2\pi.(FI + f_{loc}).t + \theta_{loc}).c_2(t - \tau - T_{1/2})$$

$T_{1/2}$ correspond à la demi-période du code $c_2$ modulant les signaux émis par le deuxième émetteur 4. Dans le cas où $c_1$ et $c_2$ ont la même période, $T_{1/2}$ a la même valeur que précédemment.

On calcule une première grandeur de corrélation, comme précédemment, en corrélant le signal S(t) selon l'équation (4.1) avec le signal local $S_{loc,2}(t,\tau)$ et on calcule une deuxième grandeur de corrélation en corrélant le signal S(t) avec le signal local $S_{loc,2}(t,\tau\text{-}T_{1/2})$. On ne réécrit pas l'intégralité des équations car elles procèdent de la même logique.

Les première et deuxième grandeurs de corrélation ont alors respectivement comme expression les équations (4.15) et (4.16) suivantes:

$$R_2(\tau) = R_{21}(\tau) + R_{21}(\tau - T_{1/2}) + R_{22}(\tau) - R_{22}(\tau - T_{1/2}) + n(\tau) \quad (4.15)$$

$$R_2(\tau - T_{1/2}) = R_{21}(\tau + T_{1/2}) + R_{21}(\tau) + R_{22}(\tau + T_{1/2}) - R_{22}(\tau) + n(\tau) \quad (4.16)$$

Une combinaison des deux grandeurs de corrélation ci-dessus peut ensuite être effectuée par le récepteur 2. Dans l'exemple considéré, cette combinaison est une soustraction.

On obtient alors le résultat selon l'équation (4.17) ci-dessous :

$$R_2(\tau) - R_2(\tau - T_{1/2}) = 2.R_{22}(\tau) - R_{22}(\tau - T_{1/2}) - R_{22}(\tau + T_{1/2}) + R_{21}(\tau - T_{1/2}) - R_{21}(\tau + T_{1/2})$$

Etant donné que les termes $R_{22}$ et $R_{21}$ sont T périodiques, on peut simplifier l'équation (4.17) en:

$$R_2(\tau) - R_2(\tau - T_{1/2}) = 2.R_{22}(\tau) - 2.R_{22}(\tau - T_{1/2})$$

Le résultat de la combinaison des première et deuxième grandeurs de corrélation est représenté sur la figure 3. Comme on peut le voir, on se trouve en présence de deux pics de corrélation 7 distincts, mais cependant porteurs de la même information, décalés d'une demi-période de code et déphasés de 180°.

Le résultat obtenu dans le cadre de la poursuite des signaux émis par le deuxième émetteur 4 est le pendant de celui obtenu dans le cadre de la poursuite des signaux émis par le premier émetteur 3, comme décrit précédemment.

Dans ce qui précède, on a supposé que l'on pouvait ne pas tenir compte de la contribution liée à l'effet Doppler, notamment du fait que le récepteur 2 est statique vis-à-vis des émetteurs 3 et 4.

On va maintenant décrire d'autres exemples de mise en oeuvre de l'invention s'appliquant en particulier quand le récepteur 2 n'est plus statique vis-à-vis des émetteurs.

Dans ce qui suit, on considère le cas où le deuxième émetteur 4 présente une fréquence Doppler $f_2$ supérieure à la fréquence Doppler $f_1$ du premier émetteur 3. $f_{loc}$ désigne comme précédemment la fréquence Doppler du signal local.

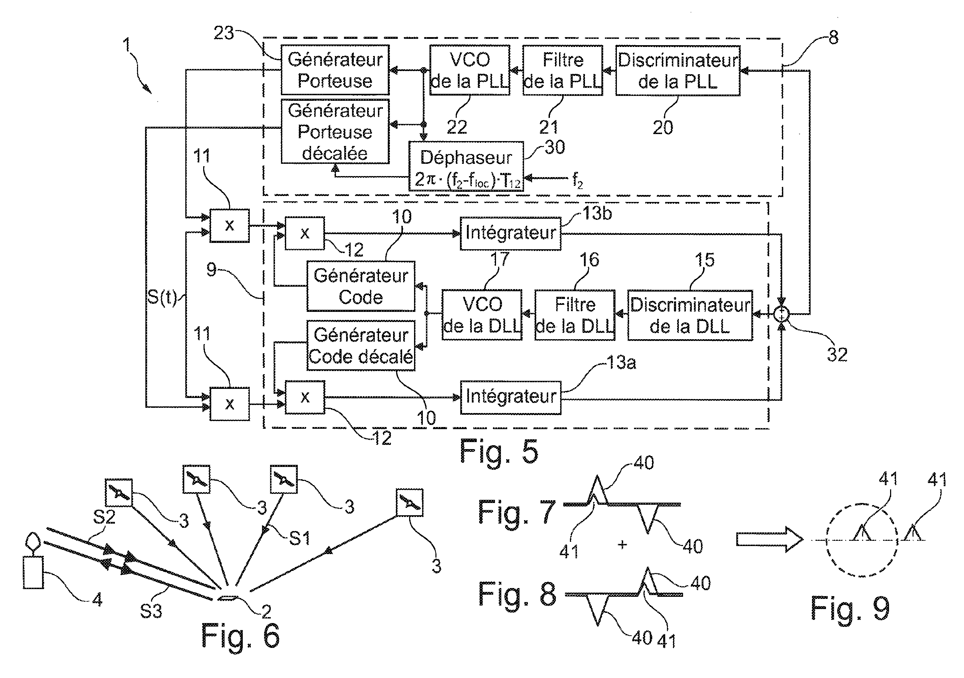

Contrairement aux exemples décrits en rapport avec les figures 1 à 4 dans lesquels les premier et deuxième signaux locaux avaient des porteuses locales non déphasées, le récepteur 2 met en oeuvre dans les exemples qui vont à présent être décrits des première et deuxième porteuses locales déphasées. Dans ces exemples, on utilise un récepteur 2 dont les boucles de poursuite peuvent être conformes à celles représentées sur la figure 5.

Les boucles de poursuite représentées sur la figure 5 diffèrent de celles de la figure 4 par la présence dans la boucle PLL 8 d'un déphaseur 30 recevant en entrée la valeur de la fréquence Doppler la plus forte $f_2$, par exemple depuis une autre boucle du récepteur, et le signal en sortie du VCO 22. Ce déphaseur 30 est configuré pour générer un déphasage variable dans la deuxième porteuse locale sur la base des fréquences $f_2$ et $f_{loc}$, ce déphasage prenant alternativement une valeur positive et une valeur négative. Lorsque le code modulant les signaux émis par l'émetteur du système que l'on cherche à poursuivre est périodique, le déphasage généré par le déphaseur 30 peut changer de signe toutes les demi-périodes dudit code.

Les boucles représentées sur la figure 5 permettent qu'une deuxième porteuse locale de phase variable soit utilisée.

Si l'on calcule les grandeurs de corrélation selon un temps d'intégration égal à la période du code utilisé, c'est-à-dire selon T = $NT_c$ = $2T_{1/2}$, alors cette deuxième porteuse locale peut être déphasée de $-2\pi.(f_2 - f_{loc}).T_{1/2}$ durant une première fraction, par exemple la première moitié, du temps d'intégration et de $2\pi.(f_2 - f_{loc}).T_{1/2}$ durant la fraction restante, notamment la seconde moitié, du temps d'intégration.

Ainsi, si $t_n$ est le temps initial de la nième intégration de la boucle, le signal local utilisé pour calculer la première grandeur de corrélation aura la forme suivante, avec une première porteuse locale,

$$\sin(2\pi(f_{L1} + f_{loc}).t + \theta_{loc}).c_1(t - \tau)\, \text{pour}\, t \in \left]t_n ; t_n + NT_c\right]$$

et le signal local utilisé pour calculer la deuxième grandeur de corrélation aura la forme suivante avec une deuxième porteuse locale,

$$\sin(2\pi(f_{L1} + f_{loc})t + \theta_{loc} - \pi.(f_2 - f_{loc})T).c_1(t - T_{1/2} - \tau)\, \text{pour}\, t \in \left]t_n ; t_n + \frac{T}{2}\right]$$

et

$$\sin(2\pi(f_{L1} + f_{loc})t + \theta_{loc} + \pi.(f_2 - f_{loc})T).c_1(t - T_{1/2} - \tau)\, \text{pour}\, t \in \left]t_n + \frac{T}{2} ; t_n + T\right]$$

$f_{loc}$ étant la fréquence induite localement qui correspond à la commande du VCO 22 dans le cas de la poursuite des signaux émis par le premier émetteur 3, sa valeur étant alors proche de $f_1$, $\theta_{loc}$ étant la phase de la porteuse locale et $\tau$ étant le retard de corrélation induit par le récepteur pour piloter le déphasage du code.

Le résultat de la démodulation par cette porteuse locale modifiée du signal reçu par le récepteur 2 peut être mélangé par les mélangeurs 12 aux trois répliques "en Avance", "en Phase", "en Retard" déphasées de $T_{1/2}$ du code local $c_1$ avant intégration par l'intégrateur 13a, puis addition par le sommateur 32 avec le résultat de la démodulation directe en sortie de l'intégrateur 13b. Ensuite, le signal résultant est traité par les discriminateurs 15 et 20, similairement à ce qui a été décrit en référence à la figure 4.

Pour réduire le risque que l'éblouissement change au cours de la poursuite, c'est-à-dire que le signal émis par le premier émetteur 3 devienne le signal de plus forte puissance et que le deuxième émetteur 4 soit ébloui par le premier émetteur 3, chaque canal de réception du récepteur peut utiliser la fréquence Doppler de l'autre canal même s'il n'est pas effectivement en situation d'éblouissement. De cette façon, on augmente les chances de pouvoir supprimer les interférences d'un émetteur sur l'autre.

Comme dans les exemples des figures 1 à 4, le récepteur 2 peut calculer une première et une deuxième grandeur de corrélation, respectivement entre le signal S et le signal local ayant la première porteuse locale et entre le signal S et le signal local ayant la deuxième porteuse locale.

On obtient pour les termes d'interférence de la première grandeur de corrélation l'équation (4.34) ci-dessous :

$$\frac{A_2}{T}\int_{t=0}^{t=T_{1/2}}\cos(2\pi(f_2-f_{loc}).t+\theta_2-\theta_{loc}).c_2(t-d_2).c_1(t-\tau).dt$$

$$\frac{A_2}{T}\int_{t=T_{1/2}}^{t=T}\cos(2\pi(f_2-f_{loc}).t+\theta_2-\theta_{loc}).c_2(t-d_2).c_1(t-\tau).dt$$

$$-\frac{A_2}{T}\int_{t=0}^{t=T_{1/2}}\cos(2\pi(f_2-f_{loc}).t+\theta_2-\theta_{loc}-\pi.(f_2-f_{loc})T).c_2(t-T_{1/2}-d_2).c_1(t-T_{1/2}-\tau).dt$$

$$-\frac{A_2}{T}\int_{t=T_{1/2}}^{t=T}\cos(2\pi(f_2-f_{loc}).t+\theta_2-\theta_{loc}+\pi.(f_2-f_{loc})T).c_2(t-T_{1/2}-d_2).c_1(t-T_{1/2}-\tau).dt$$

On obtient pour les termes d'interférence de la deuxième grandeur de corrélation l'équation (4.35) ci-dessous :

$$-\frac{A_2}{T}\int_{t=0}^{t=T_{1/2}}\cos(2\pi(f_2-f_{loc}).t+\theta_2-\theta_{loc}).c_2(t-T_{1/2}-d_2).c_1(t-\tau).dt$$

$$-\frac{A_2}{T}\int_{t=T_{1/2}}^{t=T}\cos(2\pi(f_2-f_{loc}).t+\theta_2-\theta_{loc}).c_2(t-T_{1/2}-d_2).c_1(t-\tau).dt$$

$$+\frac{A_2}{T}\int_{t=0}^{t=T_{1/2}}\cos(2\pi(f_2-f_{loc}).t+\theta_2-\theta_{loc}-\pi.(f_2-f_{loc})T).c_2(t-d_2).c_1(t-T_{1/2}-\tau).dt$$

$$+\frac{A_2}{T}\int_{t=T_{1/2}}^{t=T}\cos(2\pi(f_2-f_{loc}).t+\theta_2-\theta_{loc}+\pi.(f_2-f_{loc})T).c_2(t-d_2).c_1(t-T_{1/2}-\tau).dt$$

Par application du changement de variable t -> u + $T_{1/2}$ pour les premiers et troisièmes termes de (4.34) et (4.35), on peut simplifier les expressions (4.34) et (4.35) ci-dessus, ces dernières devenant respectivement :

$$\frac{A_2}{T}\int_{t=T_{1/2}}^{t=T}\cos(2\pi(f_2-f_{loc}).u+\theta_2-\theta_{loc}+\pi(f_2-f_{loc})T).c_2(u+T_{1/2}-d_2).c_1(u+T_{1/2}-\tau).du$$

$$\frac{A_2}{T}\int_{t=T_{1/2}}^{t=T}\cos(2\pi(f_2-f_{loc}).t+\theta_2-\theta_{loc}).c_2(t-d_2).c_1(t-\tau).dt$$

$$-\frac{A_2}{T}\int_{t=T_{1/2}}^{t=T}\cos(2\pi(f_2-f_{loc}).u+\theta_2-\theta_{loc}).c_2(u-d_2).c_1(u-\tau).du$$

$$-\frac{A_2}{T}\int_{t=T_{1/2}}^{t=T}\cos(2\pi(f_2-f_{loc}).t+\theta_2-\theta_{loc}+\pi.(f_2-f_{loc})T).c_2(t-T_{1/2}-d_2).c_1(t-T_{1/2}-\tau).dt$$

Et :

$$-\frac{A_2}{T}\int_{t=T_{1/2}}^{t=T}\cos(2\pi(f_2-f_{loc}).u+\theta_2-\theta_{loc}+\pi.(f_2-f_{loc})T).c_2(u-d_2).c_1(u+T_{1/2}-\tau).du$$

$$-\frac{A_2}{T}\int_{t=T_{1/2}}^{t=T}\cos(2\pi(f_2-f_{loc}).t+\theta_2-\theta_{loc}).c_2(t-T_{1/2}-d_2).c_1(t-\tau).dt$$

$$+\frac{A_2}{T}\int_{t=T_{1/2}}^{t=T}\cos(2\pi(f_2-f_{loc}).u+\theta_2-\theta_{loc}).c_2(u+T_{1/2}-d_2).c_1(u-\tau).du$$

$$+\frac{A_2}{T}\int_{t=T_{1/2}}^{t=T}\cos(2\pi(f_2-f_{loc}).t+\theta_2-\theta_{loc}+\pi.(f_2-f_{loc})T).c_2(t-d_2).c_1(t-T_{1/2}-\tau).dt$$

On peut encore réarranger les deux expressions ci-dessus en tenant compte du fait que toutes les intégrales se font maintenant sur le même intervalle et que les codes $c_1$ et $c_2$ sont $2T_{1/2}$ périodiques, c'est-à-dire que $c_1(t+T_{1/2})$ = $c_1(t-T_{1/2})$.

Dans ces conditions, les deux expressions immédiatement ci-dessus voient tous leurs termes se compenser et sont donc égales à 0.

Ainsi, le choix des porteuses locales ci-dessus permet d'éliminer les interférences, même en tenant compte de l'effet Doppler.

Dans les exemples qui viennent d'être décrits, chaque émetteur du système 1 émet simultanément deux signaux modulés par un même code qui est retardé d'un signal à l'autre. Néanmoins, l'invention n'est pas limitée à une telle double émission de signaux par chaque émetteur du système 1.

On va maintenant décrire, en référence à la figure 6 un autre exemple de mise en oeuvre de l'invention.

Le système 1 comporte dans cet exemple un récepteur 2 qui comporte par exemple des boucles de poursuite telles que décrites en référence à la figure 5, une pluralité de premiers émetteurs 3 et un deuxième émetteur 4.

Les premiers émetteurs 3 sont par exemple des satellites formant une constellation et le deuxième émetteur 4 est un pseudolite. Le deuxième émetteur 4 est dans l'exemple considéré fixe par rapport au sol, contrairement aux premiers émetteurs 3. Le système 1 est par exemple de type GNSS.

Comme représenté sur la figure 6, le pseudolite 4 émet des signaux S2 et S3 qui présentent une puissance supérieure à celle des signaux émis par les satellites 3. Le rapport entre la puissance d'un signal émis par le pseudolite 4 et d'un signal émis par chaque satellite 3 est par exemple supérieur à 24 dB.

Le système 1 considéré permet dans cet exemple de réduire, notamment d'éliminer le résultat de l'intercorrélation calculée par le récepteur 2 entre les signaux émis par les satellites 3 et les signaux émis par le pseudolite 4

On s'intéresse par la suite au signal S1 émis par un des satellites 3 et que l'on cherche à poursuivre.

Le signal reçu au niveau de l'antenne du récepteur 2 est dans l'exemple décrit de la forme indiquée par l'équation (4.40) :

$$S(t)=\sum_{k=1}^{ns}a_k.\sin((\omega+\omega_k).t+\theta_k).D_k(t).c_k(t-d_k)+n(t)$$

$$+A_{pl}.\sin((\omega+\omega_{pl}).t+\theta_{pl}).D_{pl}(t).c_{pl}(t-d_{pl})-A_{pl}.\sin((\omega+\omega_{pl}).t+\theta_{pl}).D_{pl}(t).c_{pl}(t-d_{pl}-T_{1/2})$$

Avec:

$n_s$ : le nombre de satellites,

$\omega$ : la pulsation à la fréquence porteuse,

$a_k$ : l'amplitude du satellite k,

$\omega_k$ : la pulsation due au Doppler sur le satellite k incluant la dérive du biais d'horloge,

$\theta_k$ : la phase de la porteuse du signal du satellite k,

$D_k$ : le message de navigation du satellite k,

$c_k$ : le code du satellite k, étant un code de Gold,

$d_k$ : la pseudodistance entre le récepteur et le satellite k,

$A_{pl}$ : l'amplitude du signal du pseudolite,

$\omega_{pl}$ : la pulsation Doppler sur le pseudolite incluant la dérive du biais d'horloge,

$\theta_{pl}$ : la phase de la porteuse du signal du pseudolite,

$D_{pl}$ : le message de navigation du pseudolite,

$c_{pl}$ : le code du pseudolite, étant un code de Gold, et

$d_{pl}$ : la pseudodistance entre le récepteur et le pseudolite.

Dans l'exemple considéré, seul le pseudolite 4 émet simultanément deux signaux différant par un déphasage de 180° et par un retard du code $c_{pl}$ égal à une demi-période de ce dernier, contrairement aux exemples précédemment décrits, dans lesquels tous les émetteurs émettaient simultanément deux signaux, les deux signaux étant déphasés et modulés par un même code qui est retardé pour l'un des deux signaux. On considère en effet dans l'exemple de la figure 6 que le signal du pseudolite 4 n'est pratiquement pas perturbé par les signaux des satellites 3.

Selon une première étape, on acquiert le signal du pseudolite 4 pour en extraire $\omega_{pl}$, en mettant à profit l'hypothèse selon laquelle l'amplitude $A_{pl}$ du pseudolite 4 est très grande devant l'amplitude $a_k$ de chaque satellite, pour tout k.

Selon une deuxième étape, on calcule les première et deuxième grandeurs de corrélation, similairement à ce qui a été décrit précédemment, en corrélant le signal S, respectivement avec :

- un signal local modulé par le code modulant le signal émis par le satellite i et ayant une première porteuse locale, l'expression de ce signal étant donnée par l'équation (4.41), ci-dessous et,
- un signal local modulé par le code modulant le satellite i retardé d'une demi-période $T_{1/2}$ dudit code et ayant une deuxième porteuse locale générée comme expliqué en rapport avec la figure 5 et dont l'expression est donnée par l'équation (4.42) ci-dessous :

$$\sin((\omega + \omega_i)t + \theta_{loc}).c_i(t - \tau) \quad (4.41)$$

Et

$$\sin((\omega + \omega_i)t + \theta_{loc} - \frac{(\omega_i - \omega_{pl}).T}{2}).c_i(t - \tau - T_{1/2}) \text{ pour } t \in \left]t_n ; t_n + \frac{T}{2}\right]$$

$$(4.42)$$

$$\sin((\omega + \omega_i)t + \theta_{loc} + \frac{(\omega_i - \omega_{pl}).T}{2}).c_i(t - \tau - T_{1/2}) \text{ pour } t \in \left]t_n + \frac{T}{2} ; t_n + T\right]$$

avec $t_n$ l'instant de début de l'intégration, $\theta_{loc}$ la phase de la porteuse locale, $\tau$ le déphasage commandé du code et $T = 2T_{1/2}$ le temps d'intégration.

La figure 7 représente la fonction de corrélation entre les signaux du pseudolite 4 et du satellite 3 en fonction du déphasage $\tau$ du code local.

On observe deux pics 40 déphasés de 180° et décalés d'une demi-période du code $c_i$ modulant le signal S1 émis par le satellite 3. Ces pics 40 traduisent l'intercorrélation entre pseudolite 4 et émetteur 3, ainsi qu'un seul pic 41 d'amplitude très inférieure à celle d'un pic 40 et correspondant au signal du satellite 3 que l'on cherche à poursuivre.

Similairement, la figure 8 représente la fonction de corrélation entre les signaux émis par le pseudolite 4 et le satellite 3 dont on cherche à poursuivre le signal en fonction du déphasage $\tau$ du code local.

On observe sur la figure 8 deux pics 40 déphasés de 180° et décalés d'une demi-période du code $c_i$ modulant le signal émis par le satellite 3, ces pics 40 traduisant l'intercorrélation entre pseudolite et émetteur, ainsi qu'un seul pic 41 d'amplitude très inférieure à celle d'un pic 40 et correspondant au signal du satellite 3 que l'on cherche à poursuivre.

On remarque que les positions des pics 40 sont inversées entre la figure 7 et la figure 8, ce qui permet, lorsque l'on ajoute les première et deuxième grandeurs de corrélation, la disparition des pics 40, comme représenté sur la figure 9. Seuls subsistent deux pics 41 décalés d'une demi-période du code $c_i$. On comprend ainsi au vu de ces figures 6 à 9, que le procédé qui vient d'être décrit permet de ne conserver que les termes du signal que l'on cherche à poursuivre.

De façon analytique, on peut calculer les termes d'intercorrélation entre les signaux émis par le pseudolite 4 et les signaux émis par les satellites 3 pour la première, respectivement deuxième, grandeur de corrélation. Ces derniers figurent dans les équations (4.43), respectivement (4.44), ci-dessous.

$$\frac{A_{pl}}{T} \int_{t=0}^{t=T} \cos((\omega_{pl} - \omega_{loc}).t + \theta_{pl} - \theta_{loc}).c_{pl}(t - d_{pl}).c_i(t - \tau).dt$$

$$-\frac{A_{pl}}{T} \int_{t=0}^{t=T/2} \cos((\omega_{pl} - \omega_{loc}).t + \theta_{pl} - \theta_{loc} - \frac{(\omega_{pl} - \omega_{loc}).T}{2}).c_{pl}(t - d_{pl} - T_{1/2}).c_i(t - \tau - T_{1/2}).dt$$

$$-\frac{A_{pl}}{T} \int_{t=T/2}^{t=T} \cos((\omega_{pl} - \omega_{loc}).t + \theta_{pl} - \theta_{loc} + \frac{(\omega_{pl} - \omega_{loc}).T}{2}).c_{pl}(t - d_{pl} - T_{1/2}).c_i(t - \tau - T_{1/2}).dt$$

$$(4.43)$$

$$-\frac{A_{pl}}{T} \int_{t=0}^{t=T} \cos((\omega_{pl} - \omega_{loc}).t + \theta_{pl} - \theta_{loc}).c_{pl}(t - d_{pl} - T_{1/2}).c_i(t - \tau).dt$$

$$+\frac{A_{pl}}{T} \int_{t=0}^{t=T/2} \cos((\omega_{pl} - \omega_{loc}).t + \theta_{pl} - \theta_{loc} - \frac{(\omega_{pl} - \omega_{loc}).T}{2}).c_{pl}(t - d_{pl}).c_i(t - \tau - T_{1/2}).dt$$

$$+\frac{A_{pl}}{T} \int_{t=T/2}^{t=T} \cos((\omega_{pl} - \omega_{loc}).t + \theta_{pl} - \theta_{loc} + \frac{(\omega_{pl} - \omega_{loc}).T}{2}).c_{pl}(t - d_{pl}).c_i(t - \tau - T_{1/2}).dt$$

$$(4.44)$$

En additionnant les première et deuxième grandeurs de corrélation, les termes des expressions (4.43) et (4.44) se compensent tous, en utilisant les mêmes changements de variable que pour l'exemple décrit en référence à la figure 5.

Comme on vient de le voir, l'invention peut être utilisée avec une constellation GNSS extérieure et un pseudolite. Le signal du pseudolite est avantageusement toujours celui qui provoque l'éblouissement et le système ne comprend avantageusement qu'un seul émetteur dont le signal a une puissance supérieure à celle des autres signaux émis par les autres émetteurs du système, de telle sorte que cet émetteur puisse éblouir le récepteur 2.

Dans l'exemple qui vient d'être décrit, les signaux émis par le pseudolite 4 comportent un message de navigation D mais, dans une variante, ce signal peut être dépourvu de message de navigation ou transmettre un message de navigation de débit inférieur à celui d'un satellite. Ce débit est par exemple inférieur à 50 Hz, cette valeur étant le débit actuel du message GPS.

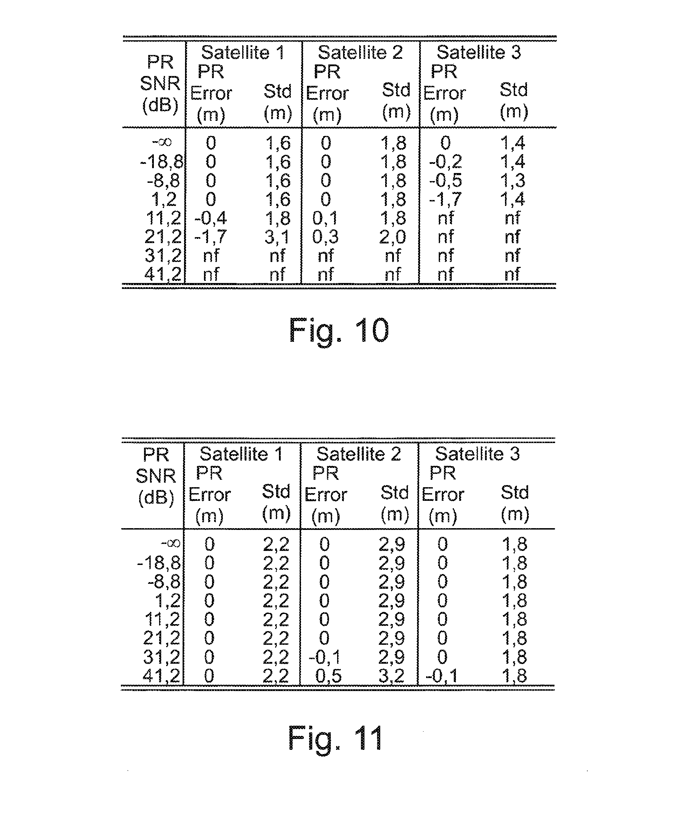

Les figures 10 et 11 sont des tableaux montrant les performances en terme de poursuite par le récepteur 2 de signaux émis par les satellites, respectivement selon l'art antérieur et selon l'invention telle que décrite en référence aux figures 6 à 9.

Dans ces tableaux, la première colonne de gauche correspond au rapport signal/bruit du pseudolite 4 et chaque ligne du tableau correspond à une simulation d'une durée égale à 10 secondes pour un rapport signal/bruit donné du pseudolite.

La première valeur du rapport signal/bruit donnée, - ∞, signifie qu'il n'y a pas de pseudolite, cette ligne correspondant en fait à une donnée référence.

Pour chaque satellite 3, on mesure d'une part l'erreur moyenne de la pseudodistance lors de la simulation et l'écart type sur cette erreur. Les résultats sont fournis en mètres et le symbole "nf" pour (« near-far ») signifie que l'éblouissement est tel qu'aucune valeur stable de pseudodistance ne peut être obtenue par le récepteur pour ce satellite.

Comme on peut le constater sur la figure 10, pour chaque satellite, l'effet des interférences causées par la présence du pseudolite se traduit d'abord par une dégradation de la mesure de la moyenne de la pseudodistance. Lorsque la puissance du signal émis par le pseudolite 4 augmente, le satellite n°3 ne peut plus être poursuivi. Les différences de comportement des différents satellites s'expliquent par l'effet Doppler. Le satellite n°3, qui a la même fréquence Doppler que le pseudolite 4 est perturbé dès lors que le rapport signal/bruit du pseudolite dépasse 1,2 dB, c'est-à-dire lorsque la puissance du signal émis par le pseudolite dépasse de 20 dB la puissance du signal émis par le satellite. On constate que les satellites n°1 et 2, qui ont une fréquence Doppler différente de celle du pseudolite, sont épargnés par l'éblouissement jusqu'à ce que le pseudolite présente un rapport signal/bruit important. Dès lors que ce rapport signal/bruit atteint 31,2 dB, les signaux émis par les satellites n°1 et 2 ne peuvent plus être poursuivis.

La comparaison avec la figure 11 révèle que quelle que soit la puissance des signaux émis par le pseudolite, traduite par le rapport signal/bruit, aucune situation d'éblouissement ne se produit.

Ainsi, la double émission par le pseudolite de signaux, tel qu'expliquée ci-dessus, permet de réduire, voire d'éliminer, l'éblouissement du récepteur lorsqu'il cherche à poursuivre le signal émis par un des satellites en présence d'un émetteur de puissance supérieure.

En résumé, le principe de la Technique de la Double Emission exposé ci-dessus permet, dans un système ayant au moins deux émetteurs dont un émet sur la même antenne deux signaux déphasés d'une demi-période du code périodique modulant lesdits signaux émis par cet émetteur, et en déphasant le deuxième signal de 180° par rapport au premier signal, par une simple addition de deux grandeurs de corrélation menées en parallèle entre les signaux émis par les émetteurs, de supprimer les termes de corrélations croisées de l'autre émetteur, sans affecter le signal de celui que l'on cherche à poursuivre.

Pour prendre en compte la différence Doppler entre les deux émetteurs et la dynamique du récepteur, on peut utiliser pour calculer les grandeurs de corrélation un signal local ayant des porteuses locales différentes.

L'invention n'est pas limitée aux exemples qui viennent d'être décrits.

**Revendications**

1. Procédé de réduction de l'éblouissement d'au moins un récepteur (2) au sein d'un système (1), notamment de géolocalisation, le système(1) comprenant :

   - au moins un premier émetteur (3) émettant au moins un premier signal (S1) modulé par un premier code,
   - au moins un deuxième émetteur (4) émettant au moins un deuxième signal (S2) modulé par un deuxième code répétitif, notamment périodique, et potentiellement variable et un troisième signal (S3) déphasé par rapport au deuxième signal (S2), le troisième signal (S3) étant modulé par le deuxième code retardé d'un premier retard, et
   - le récepteur (2), celui-ci étant configuré pour détecter les signaux (S1, S2, S3) émis par les premier (3) et deuxième (4) émetteurs et mettant en oeuvre, pour la poursuite du premier signal, un signal local,

   procédé dans lequel on calcule une première grandeur de corrélation entre le signal local du récepteur (2) modulé par le premier code et un signal résultant d'une combinaison d'au moins les premier (S1), deuxième (S2) et troisième (S3) signaux, on calcule une deuxième grandeur de corrélation entre le signal local du récepteur, modulé par le premier code retardé du premier retard et le signal résultant de la combinaison d'au moins les premier (S1), deuxième (S2) et troisième (S3) signaux et, on combine les première et deuxième grandeurs de corrélation pour améliorer le rapport signal/bruit du premier signal (S1) reçu par le récepteur (2) en réduisant l'éblouissement du récepteur par le deuxième signal (S2).

2. Procédé selon la revendication 1, dans lequel le premier retard est égal à 1 % près à la moitié de la durée, notamment à une demi-période, du deuxième code.

3. Procédé selon la revendication 1 ou 2, dans lequel le déphasage entre le deuxième (S2) et le troisième (S3) signal est égal à 180° à 10 % près.

4. Procédé selon l'une quelconque des revendications 1 à 3, dans lequel le rapport entre la puissance du deuxième signal (S2) et la puissance du premier signal (S1) est supérieur à 24dB.

5. Procédé selon l'une quelconque des revendications précédentes, dans lequel le deuxième émetteur (4) est fixe par rapport au récepteur (2).

6. Procédé selon l'une quelconque des revendications précédentes, dans lequel le premier émetteur (3) est mobile par rapport au récepteur (2).

7. Procédé selon l'une quelconque des revendications précédentes, dans lequel les premier (S1) et deuxième (S2) signaux sont émis simultanément.

8. Procédé selon l'une quelconque des revendications précédentes, dans lequel les deuxième (S2) et troisième (S3) signaux sont émis simultanément.

9. Procédé selon l'une quelconque des revendications précédentes, dans lequel les premier, (S1) deuxième (S2) et troisième (S3) signaux ont la même fréquence porteuse.

10. Procédé selon l'une quelconque des revendications précédentes, dans lequel le signal local utilisé pour calculer la première grandeur de corrélation a une porteuse locale en phase avec la porteuse locale du signal local utilisé pour calculer la deuxième grandeur de corrélation.

11. Procédé selon l'une quelconque des revendications 1 à 9, dans lequel le signal local utilisé pour calculer la deuxième grandeur de corrélation a une porteuse locale déphasée par rapport à la porteuse de phase du signal local utilisé pour calculer la première grandeur de corrélation.

12. Procédé selon l'une quelconque des revendications précédentes, dans lequel les première et deuxième grandeurs de corrélation sont calculées et/ou combinées ensemble par le récepteur (2).

13. Système (1), notamment de géolocalisation, comportant :

   - un premier émetteur (3) émettant au moins un premier signal (S1) modulé par un premier code,
   - au moins un deuxième émetteur (4) émettant au moins un deuxième signal (S2) modulé par un deuxième code répétitif et potentiellement variable, notamment périodique, et
   - au moins un récepteur (2) configuré pour détecter les signaux (S1, S2) émis par les premier et deuxième émetteurs et disposant, pour la détection du premier signal (S1) d'un signal local,

   le deuxième émetteur (4) étant configuré pour émettre, notamment simultanément, le deuxième signal (S2) et un troisième signal (S3) déphasé par rapport au deuxième signal (S2), le déphasage entre le deuxième et le troisième signal étant notamment égal à 180° à 10 % près, et modulé par le deuxième code retardé d'un premier retard, étant notamment égal à 1 % près à la moitié de la durée, notamment à une demi-période, du deuxième code, système (1) dans lequel une première grandeur de corrélation entre le signal local du récepteur (2), modulé par le premier code, et un signal résultant d'une combinaison d'au moins les premier (S1), deuxième (S2) et troisième (S3) signaux, et une deuxième grandeur de corrélation entre le signal local du récepteur, modulé par le premier code retardé du premier retard, et le signal résultant de la combinaison d'au moins les premier (S1), deuxième (S2) et troisième (S3) signaux sont calculées et combinées pour améliorer le rapport signal/bruit du premier signal (S1) reçu par le récepteur (2) en réduisant l'éblouissement du récepteur par le deuxième signal (S2).

14. Emetteur (4), destiné à être utilisé au sein d'un système (1), notamment de géolocalisation, tel que défini à la revendication 13, ledit système comprenant au moins un autre émetteur (3), émettant au moins un premier signal (S1) modulé par un premier code, et un récepteur (2) configuré pour détecter les signaux émis (S1, S2, S3) par ledit émetteur (4) et l'autre émetteur (3) et disposant, pour la détection du premier signal (S1), d'un signal local, ledit émetteur (4) étant configuré pour :

   - émettre, notamment simultanément, un signal (S2) modulé par un deuxième code et un autre signal (S3) déphasé par rapport audit signal, l'autre signal (S3) étant modulé par ledit deuxième code retardé d'un retard,

   une première grandeur de corrélation entre le signal local du récepteur (2), modulé par le premier code, et un signal résultant d'une combinaison d'au moins les premier (S1), deuxième (S2) et troisième (S3) signaux, et une deuxième grandeur de corrélation entre le signal local du récepteur, modulé par le premier code retardé du premier retard, et le signal résultant de la combinaison d'au moins les premier (S1), deuxième (S2) et troisième (S3) signaux étant, au sein du système (1), calculées et combinées pour améliorer le rapport signal/bruit du premier signal (S1) reçu par le récepteur (2) en réduisant l'éblouissement du récepteur par le deuxième signal (S2).

15. Récepteur (2), destiné à être utilisé au sein d'un système (1), notamment de géolocalisation, tel que défini à la revendication 13, ledit système comprenant au moins un premier émetteur (3) émettant au moins un premier signal (S1) modulé par un premier code et au moins un deuxième émetteur (4) émettant au moins un deuxième signal (S2) modulé par un deuxième code répétitif et potentiellement variable, notamment périodique, le deuxième émetteur (4) émettant en outre, notamment simultanément à l'émission du deuxième signal (S2), au moins un troisième signal (S3) déphasé par rapport au deuxième signal (S2) et modulé par le deuxième code retardé d'un premier retard,

le récepteur (2) étant configuré pour :

- détecter et démoduler le premier signal (S1), la détection du premier signal (S1) mettant en oeuvre un signal local du récepteur,
- calculer une première grandeur de corrélation entre le signal local du récepteur modulé par le premier code et un signal résultant d'une combinaison d'au moins les premier (S1), deuxième (S2) et troisième (S3) signaux,
- calculer une deuxième grandeur de corrélation entre le signal local du récepteur (2) modulé par le premier code (S1) retardé du premier retard et le signal résultant de la combinaison d'au moins les premier (S1), deuxième (S2) et troisième (S3) signaux et,
- combiner les première et deuxième grandeurs de corrélation.

**Patentansprüche**

1. Verfahren zur Blendungsreduktion mindestens eines Empfängers (2) innerhalb eines Systems (1), insbesondere eines Geoortungssystems, wobei das System (1) Folgendes umfasst:

- mindestens einen ersten Sender (3), der mindestens ein erstes Signal (S1), das mit einem ersten Code moduliert ist, sendet,
- mindestens einen zweiten Sender (4), der mindestens ein zweites Signal (S2), das mit einem zweiten wiederholten, insbesondere periodischen, und potenziell variablen Code moduliert ist, und ein drittes Signal (S3), das in Bezug auf das zweite Signal (S2) phasenverschoben ist, sendet, wobei das dritte Signal (S3) mit dem zweiten, um eine erste Verzögerung verzögerten Code moduliert ist, und
- den Empfänger (2), wobei dieser konfiguriert ist, um die Signale (S1, S2, S3), die von dem ersten (3) und zweiten (4) Sender gesendet werden, zu erfassen, und der zur Nachführung des ersten Signals ein lokales Signal umsetzt,

Verfahren, bei dem man eine erste Korrelationsgröße zwischen dem lokalen Signal des Empfängers (2), das mit dem ersten Code moduliert ist, und einem Signal, das aus einer Kombination mindestens des ersten (S1), zweiten (S2) und dritten (S3) Signals resultiert, berechnet, man eine zweite Korrelationsgröße zwischen dem lokalen Signal des Empfängers, das mit dem um die erste Verzögerung ersten verzögerten Code moduliert ist, und dem aus der Kombination mindestens des ersten (S1), zweiten (S2) und dritten (S3) Signals resultiert, berechnet, und man die erste und die zweite Korrelationsgröße kombiniert, um das Signal/Rauschverhältnis des ersten Signals (S1), das von dem Empfänger (2) empfangen wird, zu verbessern, wobei die Blendung des Empfängers durch das zweite Signal (S2) verringert wird.

2. Verfahren nach Anspruch 1, bei dem die erste Verzögerung auf 1 % genau gleich der Hälfte der Dauer, insbesondere einer halben Periode, des zweiten Codes ist.

3. Verfahren nach Anspruch 1 oder 2, bei dem die Phasenverschiebung zwischen dem zweiten (S2) und dem dritten (S3) Signal auf 10 % genau gleich 180° ist.

4. Verfahren nach einem der Ansprüche 1 bis 3, bei dem das Verhältnis zwischen der Leistung des zweiten Signals (S2) und der Leistung des ersten Signals (S1) größer ist als 24 dB.

5. Verfahren nach einem der vorhergehenden Ansprüche, bei dem der zweite Sender (4) in Bezug auf den Empfänger (2) stationär ist.

6. Verfahren nach einem der vorhergehenden Ansprüche, bei dem der erste Sender (3) in Bezug auf den Empfänger (2) beweglich ist.

7. Verfahren nach einem der vorhergehenden Ansprüche, bei dem das erste (S1) und das zweite (S2) Signal gleichzeitig gesendet werden.

8. Verfahren nach einem der vorhergehenden Ansprüche, bei dem das zweite (S2) und das dritte (S3) Signal gleichzeitig gesendet werden.

9. Verfahren nach einem der vorhergehenden Ansprüche, bei dem das erste (S1), das zweite (S2) und das dritte (S3) Signal dieselbe Trägerfrequenz haben.

10. Verfahren nach einem der vorhergehenden Ansprüche, bei dem das lokale Signal, das zum Berechnen der ersten Korrelationsgröße verwendet wird, eine lokale Trägerwelle in Phase mit der lokalen Trägerwelle des lokalen Signals, das zum Berechnen der zweiten Korrelationsgröße verwendet wird, hat.

11. Verfahren nach einem der Ansprüche 1 bis 9, bei dem das lokale Signal, das zum Berechnen der zweiten Korrelationsgröße verwendet wird, eine im Vergleich zu der Phasenträgerwelle des lokalen Signals, das zum Berechnen der ersten Korrelationsgröße verwendet wird, phasenverschobene lokale Trägerwelle hat.

12. Verfahren nach einem der vorhergehenden Ansprüche, bei dem die erste und die zweite Korrelationsgröße vom Empfänger (2) berechnet und/oder miteinander kombiniert werden.

13. System (1), insbesondere Geoortungssystem, das Folgendes umfasst:

- einen ersten Sender (3), der mindestens ein erstes Signal (S1), das mit einem ersten Code moduliert ist, sendet,
- mindestens einen zweiten Sender (4), der mindestens ein zweites Signal (S2), das mit einem zweiten wiederholten und potenziell variablen, insbesondere periodischen, Code moduliert ist, sendet, und
- mindestens einen Empfänger (2), der konfiguriert ist, um die Signale (S1, S2), die von dem ersten und dem zweiten Sender gesendet werden, zu erfassen und der zum Erfassen des ersten Signals (S1) über ein lokales Signal verfügt,

wobei der zweite Sender (4) konfiguriert ist, um insbesondere gleichzeitig das zweite Signal (S2) und ein drittes Signal (S3), das in Bezug auf das zweite Signal (S2) phasenverschoben ist, zu senden, wobei die Phasenverschiebung zwischen dem zweiten und dem dritten Signal insbesondere auf 10 % genau gleich 180° ist und mit dem zweiten, um eine erste Verzögerung verzögerten Code moduliert ist, die insbesondere auf 1 % genau gleich der halben Dauer, insbesondere einer halben Periode, des zweiten Codes ist, System (1), in dem eine erste Korrelationsgröße zwischen dem lokalen Signal des Empfängers (2), das mit dem ersten Code moduliert ist, und einem Signal, das aus einer Kombination mindestens des ersten (S1), zweiten (S2) und dritten (S3) Signals resultiert, und eine zweite Korrelationsgröße zwischen dem lokalen Signal des Empfängers, das mit dem ersten, um die erste Verzögerung verzögerten Code moduliert ist, und dem Signal, das aus der Kombination mindestens des ersten (S1), zweiten (S2) und dritten (S3) Signals resultiert, berechnet und kombiniert werden, um das Signal/Rauschverhältnis des ersten Signals (S1), das von dem Empfänger (2) empfangen wird, zu verbessern, wobei die Blendung des Empfängers durch das zweite Signal (S2) verringert wird.

14. Sender (4), der dazu bestimmt ist, innerhalb eines Systems (1), insbesondere eines Geoortungssystems, wie in Anspruch 13 definiert, verwendet zu werden, wobei das System mindestens einen anderen Sender (3), der mindestens ein erstes Signal (S1) sendet, das mit einem ersten Code moduliert ist, und einen Empfänger (2) umfasst, der konfiguriert ist, um die Signale (S1, S2, S3), die von dem Sender (4) und dem anderen Sender (3) gesendet werden, zu erfassen, und der zum Erfassen des ersten Signals (S1) über ein lokales Signal verfügt, wobei der Sender (4) konfiguriert ist, um:

- insbesondere gleichzeitig ein Signal (S2), das mit einem zweiten Code moduliert ist, und ein anderes im Vergleich zu dem Signal phasenverschobenes Signal (S3) zu senden, wobei das andere Signal (S3) mit dem zweiten, um eine Verzögerung verzögerten Code moduliert ist,

wobei eine erste Korrelationsgröße zwischen dem lokalen Signal des Empfängers (2), das mit dem ersten Code moduliert ist, und einem Signal, das aus einer Kombination mindestens des ersten (S1) zweiten (S2) und dritten (S3) Signals resultiert, und eine zweite Korrelationsgröße zwischen dem lokalen Signal des Empfängers, das mit dem ersten, um die erste Verzögerung verzögerten Code moduliert ist, und dem Signal, das aus der Kombination mindestens des ersten (S1), zweiten (S2) und dritten (S3) Signals resultiert, innerhalb des Systems (1) berechnet und kombiniert werden, um das Signal/Rauschverhältnis des ersten Signals (S1), das von dem Empfänger (2) empfangen wird, zu verbessern, wobei die Blendung des Empfängers durch das zweite Signal (S2) verringert wird.

15. Empfänger (2), der dazu bestimmt ist, innerhalb eines Systems (1), insbesondere eines Geoortungssystems, wie in Anspruch 13 definiert, verwendet zu werden, wobei das System mindestens einen ersten Sender (3), der mindestens ein erstes Signal (S1), das mit einem ersten Code moduliert ist, sendet, und mindestens einen zweiten Sender (4) umfasst, der mindestens ein zweites Signal (S2), das mit einem zweiten wiederholten und potenziell variablen, insbesondere periodischen, Code moduliert ist, sendet, wobei der zweite Sender (4) außerdem insbesondere gleichzeitig mit dem Senden des zweiten Signals (S2), mindestens ein drittes Signal (S3), das in Bezug auf das zweite Signal (S2) phasenverschoben und mit dem zweiten, um eine erste Verzögerung verzögerten Code moduliert ist, sendet,

wobei der Empfänger (2) konfiguriert ist, um:

- das erste Signal (S1) zu erfassen und zu demodulieren, wobei das Erfassen des ersten Signals (S1) ein lokales Signal des Empfängers umsetzt,
- eine erste Korrelationsgröße zwischen dem lokalen Signal des Empfängers, das mit dem ersten Code moduliert ist, und einem Signal, das aus einer Kombination mindestens des ersten (S1), zweiten (S2) und dritten (S3) Signals resultiert, zu berechnen,
- eine zweite Korrelationsgröße zwischen dem lokalen Signal des Empfängers (2), das mit dem ersten, um die erste Verzögerung verzögerten Code (S1) moduliert ist, und dem Signal, das aus der Kombination mindestens des ersten (S1), zweiten (S2) und dritten (S3) Signals resultiert, zu berechnen, und
- die erste und die zweite Korrelationsgröße zu kombinieren.

**Claims**

1.  A method for reducing the glare of at least one receiver (2) within a system (1), especially a geolocation system, the system (1) comprising:

    - at least one first emitter (3) emitting at least one first signal (S1) modulated by a first code,
    - at least one second emitter (4) emitting at least one second signal (S2) modulated by a repetitive and potentially variable second code and a third signal (S3) phase-shifted with respect to the second signal (S2), the third signal (S3) being modulated by the second code delayed by a first delay, and
    - the receiver (2), the latter being configured to detect the signals (S1, S2, S3) emitted by the first (3) and second (4) emitters and implementing, for the tracking of the first signal, a local signal,

    in which method a first correlation quantity is calculated for the correlation between the local signal of the receiver (2) modulated by the first code and a signal resulting from a combination of at least the first (S1), second (S2) and third (S3) signals, a second correlation quantity is calculated for the correlation between the local signal of the receiver, modulated by the first code delayed by the first delay and the signal resulting from the combination of at least the first (S1), second (S2) and third (S3) signals and, the first and second correlation quantities are combined to improve the signal/noise ratio of the first signal (S1) received by the receiver (2) while reducing the glare of the receiver by the second signal (S2).

2.  The method as claimed in claim 1, in which the first delay is equal to within 1% to half the duration, especially to a half-period, of the second code.

3.  The method as claimed in claim 1 or 2, in which the phase shift between the second (S2) and the third (S3) signal is equal to 180° to within 10%.

4.  The method as claimed in any one of claims 1 to 3, in which the ratio between the power of the second signal (S2) and the power of the first signal (S1) is greater than 24dB.

5.  The method as claimed in any one of the preceding claims, in which the second emitter (4) is fixed with respect to the receiver (2).

6.  The method as claimed in any one of the preceding claims, in which the first emitter (3) is mobile with respect to the receiver (2).

7.  The method as claimed in any one of the preceding claims, in which the first (S1) and second (S2) signals are emitted simultaneously.

8.  The method as claimed in any one of the preceding claims, in which the second (S2) and third (S3) signals are emitted simultaneously.

9. The method as claimed in any one of the preceding claims, in which the first (S1) second (S2) and third (S3) signals have the same carrier frequency.

10. The method as claimed in any one of the preceding claims, in which the local signal used to calculate the first correlation quantity has a local carrier in phase with the local carrier of the local signal used to calculate the second correlation quantity.

11. The method as claimed in any one of claims 1 to 9, in which the local signal used to calculate the second correlation quantity has a local carrier phase-shifted with respect to the phase carrier of the local signal used to calculate the first correlation quantity.

12. The method as claimed in any one of the preceding claims, in which the first and second correlation quantities are calculated and/or combined together by the receiver (2).

13. A system (1), especially a geolocation system, comprising:

- a first emitter (3) emitting at least one first signal (S1) modulated by a first code,
- at least one second emitter (4) emitting at least one second signal (S2) modulated by a repetitive and potentially variable, especially periodic, second code, and
- at least one receiver (2) configured to detect the signals (S1, S2) emitted by the first and second emitters and utilizing, for the detection of the first signal (S1), a local signal,

the second emitter (4) being configured to emit, especially simultaneously, the second signal (S2) and a third signal (S3) phase-shifted with respect to the second signal (S2), the phase shift between the second and the third signal being especially equal to 180° to within 10%, and modulated by the second code delayed by a first delay, being especially equal to within 1% to half the duration, especially to a half-period, of the second code, system (1) in which a first correlation quantity between the local signal of the receiver (2), modulated by the first code, and a signal resulting from a combination of at least the first (S1), second (S2) and third (S3) signals, and a second correlation quantity between the local signal of the receiver, modulated by the first code delayed by the first delay, and the signal resulting from the combination of at least the first (S1), second (S2) and third (S3) signals are calculated and combined to improve the signal/noise ratio of the first signal (S1) received by the receiver (2) while reducing the glare of the receiver by the second signal (S2).

14. An emitter (4), intended to be used within a system (1), especially a geolocation system, such as defined in claim 13, said system comprising at least one other emitter (3), emitting at least one first signal (S1) modulated by a first code, and a receiver (2) configured to detect the signals emitted (S1, S2, S3) by said emitter (4) and the other emitter (3) and utilizing, for the detection of the first signal (S1), a local signal, said emitter (4) being configured to:

- emit, especially simultaneously, a signal (S2) modulated by a second code and another signal (S3) phase-shifted with respect to said signal, the other signal (S3) being modulated by said code delayed by a delay,

a first correlation quantity between the local signal of the receiver (2), modulated by the first code, and a signal resulting from a combination of at least the first (S1), second (S2) and third (S3) signals, and a second correlation quantity between the local signal of the receiver, modulated by the first code delayed by the first delay, and the signal resulting from the combination of at least the first (S1), second (S2) and third (S3) signals being calculated and combined to improve the signal/noise ratio of the first signal (S1) received by the receiver (2) while reducing the glare of the receiver by the second signal (S2).

15. A receiver (2), intended to be used within a system (1), especially a geolocation system, such as defined in claim 13, said system comprising at least one first emitter (3) emitting at least one first signal (S1) modulated by a first code and at least one second emitter (4) emitting at least one second signal (S2) modulated by a repetitive and potentially variable, especially periodic, second code, the second emitter (4) furthermore emitting, especially simultaneously with the emission of the second signal (S2), at least one third signal (S3) phase-shifted with respect to the second signal (S2) and modulated by the second code delayed by a first delay, the receiver (2) being configured to:

- detect and demodulate the first signal (S1), the detection of the first signal (S1) implementing a local signal of the receiver,

- calculate a first correlation quantity for the correlation between the local signal of the receiver modulated by the first code and a signal resulting from a combination of at least the first (S1), second (S2) and third (S3) signals,
- calculate a second correlation quantity for the correlation between the local signal of the receiver (2) modulated by the first code (S1) delayed by the first delay and the signal resulting from the combination of at least the first (S1), second (S2) and third (S3) signals and,
- combine the first and second correlation quantities.

Fig. 1

Fig. 2

Fig. 3

Fig. 4

Fig. 5

Fig. 6

Fig. 7

Fig. 8

Fig. 9

| PR SNR (dB) | Satellite 1 | | Satellite 2 | | Satellite 3 | |
|---|---|---|---|---|---|---|
| | PR Error (m) | Std (m) | PR Error (m) | Std (m) | PR Error (m) | Std (m) |
| -∞ | 0 | 1,6 | 0 | 1,8 | 0 | 1,4 |
| -18,8 | 0 | 1,6 | 0 | 1,8 | -0,2 | 1,4 |
| -8,8 | 0 | 1,6 | 0 | 1,8 | -0,5 | 1,3 |
| 1,2 | 0 | 1,6 | 0 | 1,8 | -1,7 | 1,4 |
| 11,2 | -0,4 | 1,8 | 0,1 | 1,8 | nf | nf |
| 21,2 | -1,7 | 3,1 | 0,3 | 2,0 | nf | nf |
| 31,2 | nf | nf | nf | nf | nf | nf |
| 41,2 | nf | nf | nf | nf | nf | nf |

## Fig. 10

| PR SNR (dB) | Satellite 1 | | Satellite 2 | | Satellite 3 | |
|---|---|---|---|---|---|---|
| | PR Error (m) | Std (m) | PR Error (m) | Std (m) | PR Error (m) | Std (m) |
| -∞ | 0 | 2,2 | 0 | 2,9 | 0 | 1,8 |
| -18,8 | 0 | 2,2 | 0 | 2,9 | 0 | 1,8 |
| -8,8 | 0 | 2,2 | 0 | 2,9 | 0 | 1,8 |
| 1,2 | 0 | 2,2 | 0 | 2,9 | 0 | 1,8 |
| 11,2 | 0 | 2,2 | 0 | 2,9 | 0 | 1,8 |
| 21,2 | 0 | 2,2 | 0 | 2,9 | 0 | 1,8 |
| 31,2 | 0 | 2,2 | -0,1 | 2,9 | 0 | 1,8 |
| 41,2 | 0 | 2,2 | 0,5 | 3,2 | -0,1 | 1,8 |

## Fig. 11